# EUROPÄISCHE PATENTANMELDUNG

(11) **EP 0 567 723 A1**
(43) Veröffentlichungstag der Anmeldung: **03.11.1993**
(21) Anmeldenummer: 93100830.4
(22) Anmeldetag: 21.01.1993
(51) Int. Cl.: F16K 3/02

(54) **Gehäuseloser Schieber**

(30) Priorität: 30.04.1992 DE 9205845 U
(71) Anmelder: PASSAVANT-WERKE AG, D-65322 Aarbergen 7 (DE)
(72) Erfinder: Dicks, Horst, W-6209 Aarbergen 2 (DE); Schneider, Michael, Dipl.-Ing., W-6209 Aarbergen 2 (DE)

(57) **Zusammenfassung**

Die Dichtung für die Schieberplatten von gehäuselosen Schiebern wird erfindungsgemäß als auf den Rand (16) und/oder die Kante (17) der Schieberplatte (3) aufvulkanisierter, weichelastischer Dichtstreifen ausgebildet.

## Beschreibung

Die Neuerung betrifft gehäuselose Schieber mit Schieberplatte und Rahmen beliebiger Form und Größe. Es kommen Ausführungen aus Gußeisen, Stahlblech oder Schweißkonstruktion in Frage.

Schieber müssen in der Schließstellung abgedichtet werden. Es ist üblich, hierfür am Rand der Schieberplatte Dichtstreifen zu befestigen, die sich in Schließstellung gegen die zugehörigen Kanten des Rahmens anlegen. Die Dichtstreifen werden mit Leisten und Schrauben befestigt. Dies ist sehr aufwendig. Auch das Einkleben des Dichtstreifens in eine dafür vorgesehene, bearbeitete Nut ist bekannt. Bei quadratischen oder rechteckigen Schieberplatten ist die Abdichtung an den Ecken bei beiden Befestigungsarten gleichermaßen problematisch. Für ovale oder eiförmige Schieberplatten müssen Sonderprofile angefertigt werden.

Die Aufgabe, diesen Aufwand drastisch zu verringern und darüber hinaus die Lebensdauer der Dichtung zu verlängern, wird gemäß der Neuerung dadurch gelöst, daß die Dichtung als auf den Rand der Schieberplatte und/oder die Kante des Rahmens aufvulkanisierter, weichelastischer Dichtstreifen ausgebildet ist. Für das Aufbringen des Dichtstreifens ist keinerlei Vorbearbeitung notwendig. Lediglich bei gußeisernen Bauarten empfiehlt es sich, die Gußhaut abzuarbeiten und die Vulkanisierungsfläche anschließend aufzurauhen, z.B. durch Sandstrahlen. Der Dichtstreifen kann auch in eine vorgegossene, sehr flache Nut eingelegt und dort anvulkanisiert werden.

Als Material für den Dichtstreifen kommt Synthesekautschuk mit einer Härte von mindestens 50° Shore in Frage, der außen etwas um den hochstehenden Rand bzw. die Kante gezogen wird, so daß sich eine Abrundung ergibt, die das Abschieben des Dichtstreifens beim Auflaufen der Dichtung verhindert.

Der Vorteil des Aufvulkanisierens ist vor allem darin zu sehen, daß keine Formen zum Einbringen der Dichtmasse gebraucht werden. Die Dichtstreifen werden in der benötigten Breite vorgefertigt und zum Aufvulkanisieren auf die Schieberplatte bzw. die Rahmenteile aufgelegt.

Die Neuerung eignet sich bevorzugt für gehäuselose Schieber, die durch Schrägführungen erst kurz vor der Schließstellung zur Anlage gebracht und durch gegenläufige Schrägführungen auch wieder abgehoben werden.

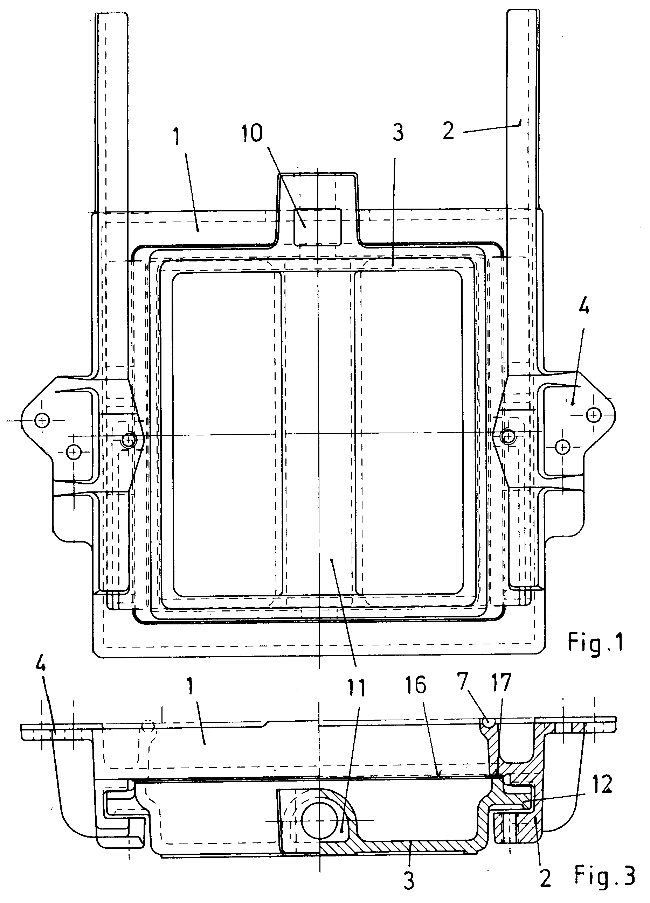

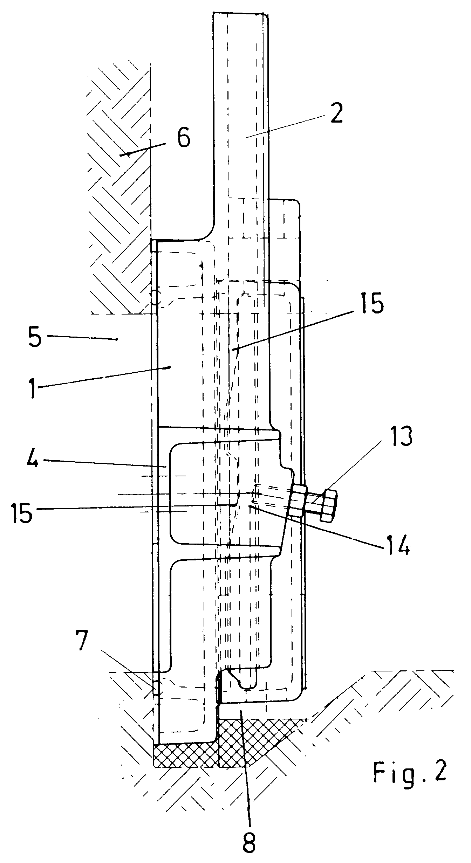

Ein solches Anwendungsbeispiel der Neuerung ist in den Zeichnungen in der Vorderansicht (Fig. 1), in der Seitenansicht (Fig.2) und in der halbseitig geschnittenen Draufsicht (Fig. 3) dargestellt. Es handelt sich um einen Gewindeschieber mit quadratischer Form in Gußeisenausführung.

Der allseits geschlossene Rahmen 1 weist zwei sich nach oben erstreckende U-fömige Führungsschienen 2 für die Offenstellung auf. In der Mitte der Schieberplatte 3 sind seitlich Pratzen 4 zum Befestigen des Rahmens an einer Ausflußöffnung 5 angegossen. Der Rahmen 1 enthält an der an der Mauerwerksfläche 6 anliegenden Seite eine Nut zum Einlegen eines Dichtrings 7. Die am Gerinneboden vorgesehene Aussparung 8 wird nach Einsetzen des Rahmens verfüllt.

Die Schieberplatte 3 enthält oben eine Aussparung 10 zum Einlegen der Spindelmutter, und darunter eine Rinne 11, in der sich die Spindel beim Öffnen bewegt. Seitlich an die Schieberplatte sind Leisten 12 angesetzt, mit denen die Schieberplatte in den Führungen 2 läuft. Das Spiel ist so bemessen, daß die Schieberplatte erst in Schließstellung zum Rahmen hin bewegt und beim Hochziehen auch wieder abgezogen wird. Hierfür sind in den Pratzen schräg stehende Keilschrauben 13 vorgesehen, die auf Keilflächen 14 auf der Rückseite der Führungsleisten 12 wirken. Auf der Vorderseite der Leisten sind je zwei Führungskulissen 15 angegossen, die in Schließstellung in entsprechende Taschen der Führungsschienen einfallen und beim Hochziehen die Schieberplatte von der Dichtkante wegziehen. Die Keilschrauben 14 sind nachstellbar zum Ausgleich von Verschleiß und zur Einstellung des Dichtdrucks.

Auf die allseits umlaufende Kante 16 der Schieberplatte 3 ist der flache Dichtstreifen 17 aufvulkanisiert. Die Gegenfläche am Rahmen ist vorzugsweise durch Fräsen oder Schleifen bearbeitet.

Eine schieberplatte in Schweißkonstruktion kann als Dichtkante eine aufgeschweißte Leiste erhalten, auf die dann der Dichtstreifen aufvulkanisiert wird. Die Leiste kann entfallen, so daß der Dichtstreifen, der dann eine Dicke von mindestens 3 mm hat, direkt auf die flache Schieberplatte vulkanisiert ist.

## Patentansprüche

1. Gehäuseloser Schieber mit Schieberplatte und Rahmen und einer in der Schließstellung wirksamen Dichtung zwischen dem Rand der Schieberplatte und den zugehörigen Kanten des Rahmens, **dadurch gekennzeichnet,** daß die Dichtung als auf den Rand (16) und/oder die Kante aufvulkanisierter, weichelastischer Dichtstreifen (17) ausgebildet ist.

2. Gehäuseloser Schieber nach Anspruch 1, **dadurch gekennzeichnet,** daß für den Dichtstreifen ein Synthesekautschuk mit einer Härte von mindestens 50° Shore verwendet wird.
